# EUROPÄISCHE PATENTSCHRIFT

(11) **EP 0 803 406 B1**
(45) Veröffentlichungstag und Bekanntmachung des Hinweises auf die Patenterteilung: **04.07.2001**
(21) Anmeldenummer: 97400871.6
(22) Anmeldetag: 01.04.1997
(51) Int. Cl.: B60R 16/02

(54) **Vorrichtung zur Signalübertragung zwischen zwei Endstellen**
Device for transmitting signals between two terminals
Dispositif de transmission de signaux entre deux terminaux

(30) Priorität: 26.04.1996 DE 19616662
(43) Veröffentlichungstag der Anmeldung: 29.10.1997
(73) Patentinhaber: ALCATEL, 75008 Paris (FR)
(72) Erfinder: Schauer, Friedrich, Dipl.-Ing., 90562 Heroldsberg (DE); Czeschka, Martin, Dipl.-Ing., 91177 Thalmässing (DE); Neuner, Andreas, Dipl.-Ing., 90478 Nürnberg (DE)
(74) Vertreter: Feray, Valérie

(56) Entgegenhaltungen:
- EP-A- 0 479 568
- EP-A- 0 680 850
- EP-A- 0 741 059
- WO-A-95/09744
- DE-A- 4 216 526
- FR-A- 2 690 285
- GB-A- 2 291 281
- US-A- 4 840 078

## Beschreibung

Die Erfindung bezieht sich auf eine Vorrichtung zur Signalübertragung zwischen zwei Endstellen, zwischen denen eine in Windungen verlaufende und in einer im wesentlichen kreisförmigen Kassette untergebrachte elektrische Leitung angeordnet ist, an die weiterführende Leitungen an den beiden Endstellen anschließbar sind und deren Länge wesentlich größer als der Abstand der beiden Endstellen voneinander ist, bei welcher mindestens eine der beiden Endstellen relativ zu der anderen bewegbar ist und bei welcher die Kassette aus zwei Teilen besteht, einem um die Achse derselben drehbaren Rotor, der in Montageposition mit einem zur Lenksäule eines Kraftfahrzeugs gehörenden Lenkrad verbunden ist, und einem feststehenden Stator, der in Montageposition mit einem Lenkstock der Lenksäule verbunden ist, wobei die Leitung zwischen Rotor und Stator angeordnet und an ihrem einen Ende mit einem ersten Teil eines elektrischen Steckverbinders verbunden ist, an dessen Kontaktelemente ihre Leiter elektrisch leitend angeschlossen sind (GB-A-2 291 281).

Eine derartige Vorrichtung wird für die Übertragung eines Signals zum Auslösen des "Airbag" eines Prallschutzes für Kraftfahrzeuge benötigt. Sie ist zur Übertragung eines elektrischen Signals in der Lenkeranordnung eines Kraftfahrzeugs untergebracht. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der eingangs erwähnten DE-A-4 216 526 erfolgt die Stromübertragung durch eine beispielsweise nach Art eines Federhauses gewickelte Flachband-Leitung - im folgenden kurz als "FBL" bezeichnet. Bei einer relativen Drehbewegung der beiden durch die FBL verbundenen Endstellen "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Für den Einbau dieser Vorrichtung in die Lenksäule eines Kraftfahrzeugs ist es daher von Bedeutung, daß die beiden Endstellen eine ganz bestimmte Position zueinander haben, mit einer entsprechenden Position der FBL, damit die vorgegebenen Umdrehungen des Rotors möglich sind, ohne daß die FBL von den Endstellen abgerissen oder sonstwie zerstört wird. Das wird bei dieser bekannten Vorrichtung durch eine spezielle Verriegelung zwischen Rotor und Stator erreicht. Nach Festlegung der Kassette an der Lenksäule des Fahrzeugs wird abschließend nach Lösen der Verriegelung das Lenkrad auf dieselbe aufgesetzt. Die Montage der Kassette erfordert einen gesonderten Arbeitsgang und führt insgesamt zu einer aufwendigen Montage der Lenkradanordnung.

In der eingangs erwähnten GB-A- 2 291 281 ist eine Vorrichtung zur Signalübertragung zwischen zwei Endstellen beschrieben, zwischen denen eine in Windungen verlaufende und in einer im wesentlichen kreisförmigen Kassette untergebrachte elektrische Leitung angeordnet ist. Weiterführende Leitungen sind an den beiden Endstellen an die Leitung anschließbar, deren Länge wesentlich größer als der Abstand der beiden Endstellen voneinander ist. Mindestens eine der beiden Endstellen ist relativ zu der anderen bewegbar. Die Kassette besteht aus zwei Teilen, einem um die Achse derselben drehbaren, mit einem zur Lenksäule eines Kraftfahrzeugs gehörenden Lenkrad verbindbaren Rotor und einem feststehenden, mit dem Lenkstock der Lenksäule verbindbaren Stator. Die Leitung ist zwischen Rotor und Stator angeordnet. Die Kassette weist einen ersten Teil eines elektrischen Steckverbinders auf, an dessen Kontaktelemente die Leiter der Leitung elektrisch leitend angeschlossen sind. Sie ist in Montageposition mit dem Lenkrad über ein als Stift ausgebildetes Befestigungselement verbunden.

Der Erfindung liegt die Aufgabe zugrunde, die eingangs geschilderte Vorrichtung so zu gestalten, daß die Montage von Kassette und Lenkrad vereinfacht sind.

Diese Aufgabe wird gemäß der Erfindung dadurch gelöst,
- daß ein zweiter Teil des Steckverbinders mit zu den Kontaktelementen des ersten Teils passenden Gegenkontakten am Lenkstock der Lenksäule angebracht ist,
- daß das Lenkrad mit daran angebrachter Kassette auf den Lenkstock der Lenksäule aufgesetzt und fest, aber drehbar mit demselben verbunden ist, wobei der erste Teil des Steckverbinders unter Herstellung einer elektrisch leitenden Verbindung einrastend auf den zweiten Teil desselben aufgesteckt ist,
- daß der Steckverbinder, dessen erster Teil am Stator der Kassette angebracht ist, den Stator unverdrehbar festhält und
- daß die Kassette mit dem Lenkrad über Befestigungselemente verbunden ist, die unter Beibehaltung der eingerasteten Verbindung der beiden Teile des Steckverbinders eine begrenzte, ausschließlich axial gerichtete Relativbewegung zwischen dem Lenkrad und der Kassette zulassen.

Bei dieser Vorrichtung wird die Kassette am Lenkrad montiert, bevor dasselbe auf den Lenkstock der Lenksäule aufgesetzt wird. In der Montageposition der Kassette sind Rotor und Stator derselben in engen Grenzen relativ zu einander drehbar. Das ist beim Aufsetzen des Lenkrades auf den Lenkstock von Vorteil, damit die beiden Teile des Steckverbinders problemlos zusammengesteckt werden können. Diese beiden Teile werden einrastend miteinander verbunden, so daß eine stabile elektrische Verbindung zwischen der Leitung der Kassette und einer weiterführenden, in der Lenksäule angebrachten Leitung hergestellt ist. Die Verbindung bleibt auch erhalten, wenn das Lenkrad - nach bereits durchgeführter Funktionsprüfung für den Airbaganschluß - zur endgültigen Justierung auf dem Lenkstock der Lenksäule noch einmal um einen kurzen Weg von demselben abgehoben wird. Dieser Weg wird durch die speziellen Befestigungselemente überbrückt, die nur eine ausschließlich axial gerichtete Bewegung des Lenkrades gegenüber der Kassette zulassen und dabei mehr oder weniger verlängert werden. Beim endgültigen Befestigen des Lenkrades am Lenkstock der Lenksäule werden die Befestigungselemente wieder auf ihre ursprüngliche Länge verkürzt.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 schematisch eine prinzipielle Darstellung einer Kassette mit einer Vorrichtung nach der Erfindung.
Fig. 2 in schematischer Darstellung einen Querschnitt durch eine Kassette.
Fig. 3 und 4 schematisch ein an einer Lenksäule befestigtes Lenkrad mit Kassette in zwei unterschiedlichen Positionen.

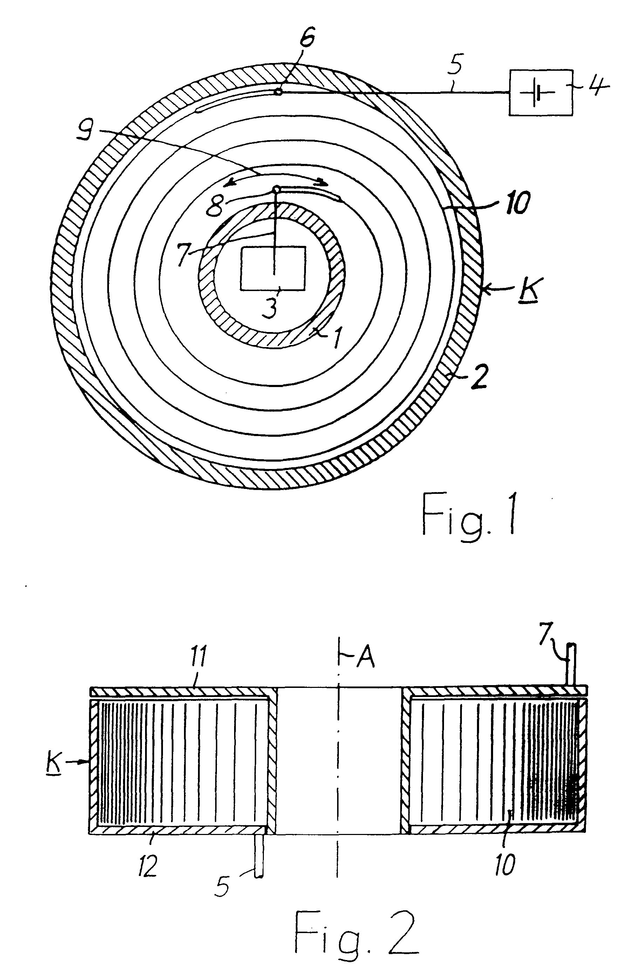

In Fig. 1 sind schematisch zwei beispielsweise kreisförmig ausgebildete Wände 1 und 2 einer Kassette K dargestellt. Sie ist für den Einbau in die Lenkeranordnung eines Kraftfahrzeugs bestimmt. Zur Stromversorgung einer Elektronik 3, durch deren Signal ein Airbag ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine Flachbandleitung 10 - im folgenden "FBL 10" genannt - mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses bzw. Abschlusses an den Endstellen 6 und 8 sind nicht genauer dargestellt. Sie sind prinzipiell in unterschiedlichen Varianten bekannt und hier nicht von Bedeutung.

Die FBL 10 kann gemäß Fig. 1 in der Kassette K zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert. Die FBL 10 kann aber auch in zwei Teilbereichen mit unterschiedlicher Wickelrichtung, zwischen denen eine Umkehrstelle liegt, in der Kassette K angebracht sein.

Gemäß Fig. 2 besteht die Kassette K aus einem Rotor 11 und einem Stator 12. Der Rotor 11 ist gegenüber dem Stator 12 um die Achse A der Kassette K drehbar. Der in Montageposition feststehende Stator 12 umschließt die FBL 10, von der in Fig. 2 nur einige Windungen schematisch eingezeichnet sind. An die FBL 10 sind die weiterführenden, aus der Kassette K herausgeführten elektrischen Leitungen 5 und 7 angeschlossen.

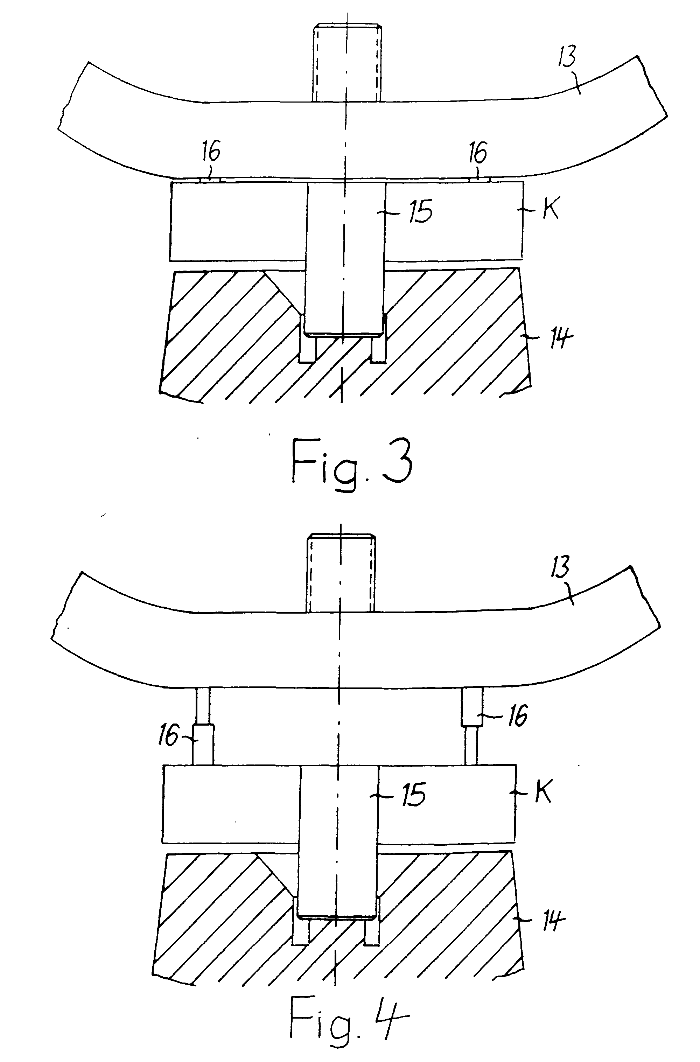

Die Kassette K ist gemäß Fig. 3 am nur ausschnittsweise angedeuteten Lenkrad 13 eines Kraftfahrzeugs angebracht. Dazu ist der Rotor 11 am Lenkrad 13 befestigt, die gemeinsam gedreht werden. Der Stator 12 wäre nach der Montage der Kassette K am Lenkrad 13 grundsätzlich um den Rotor 11 drehbar. Er ist allerdings in einer Montageposition gegenüber dem Rotor 11 zunächst verriegelt, so daß nur eine geringfügige Relativbewegung zwischen Rotor 11 und Stator 12 in Umfangsrichtung möglich ist. Diese Verriegelung wird in Arbeitsposition der Kassette K bzw. der ganzen Vorrichtung aufgehoben, so daß der Rotor 11 relativ zum Stator 12 um die Achse A der Kassette K drehbar ist.

Das Lenkrad 13 mit daran angebrachter Kassette K ist auf den ebenfalls nur schematisch angedeuteten Lenkstock 14 der Lenksäule des Kraftfahrzeugs aufgesetzt und nach endgültiger Montage fest, aber drehbar mit demselben verbunden. Dabei hält ein in Fig. 3 nur schematisch angedeuteter Steckverbinder 15, dessen erster Teil am Stator 12 der Kassette K und dessen zweiter Teil am Lenkstock 14 befestigt sind, den Stator 12 unverdrehbar fest. Zur zusätzlichen Verdrehsicherung des Stators 12 in der endgültigen Montageposition können an der Lenksäule 14 beispielsweise noch Stifte angebracht sein, die in korrespondierende Ausnehmungen des Stators 12 hineinragen.

Die Kassette K ist am Lenkrad 13 mittels Befestigungselementen 16 festgelegt, die eine Bewegung zwischen beiden Teilen zulassen. Dabei handelt es sich um eine ausschließlich axial gerichtete Bewegung. Es sind beispielsweise vier um jeweils 90° in Umfangsrichtung gegeneinander versetzte Befestigungselemente 16 vorhanden. Sie sind jeweils mit einem Ende am Lenkrad 13 und mit ihrem anderen Ende am Rotor 11 der Kassette K bzw. an mit dem Rotor verbundenen Teilen angebracht. Dabei kann das aufnehmende größte Rohrstück entweder an der Kassette K (Fig. 4 links) oder am Lenkrad 13 (Fig. 4 rechts) befestigt sein.

Die Befestigungselemente 16 bestehen beispielsweise aus teleskopartig ineinander bewegbaren Teilen. Diese Teile sollen möglichst so schwergängig ineinander bewegbar sein, daß die Kassette K ihre aus Fig. 3 ersichtliche Montageposition einhält, und nicht durch ihr Eigengewicht vom Lenkrad 13 fortbewegt wird.

Nach dem Aufsetzen des Lenkrades 13 mit daran montierter Kassette K auf den Lenkstock 14 sitzt der Steckverbinder 15 in seiner Arbeitsstellung. Er ist dann mit dem Gegenstecker am Lenkstock 14 verrastet. Die elektrisch leitende Verbindung ist hergestellt. Die Verrasterung muß so fest sein, daß sie beim Auseinanderziehen der Teile der Befestigungselemente 16 nicht gelöst wird.

Vor der endgültigen Montage des Lenkrades 13 mit exakter Einstellung desselben gegenüber den Vorderrädern des Fahrzeugs wird dasselbe noch einmal vom Lenkstock 14 abgehoben. Dabei bleiben die Arbeitsposition der Kassette K und damit die Steckverbindung erhalten. Ermöglicht wird das durch die Befestigungselemente 16, die gemäß Fig. 4 entsprechend dem vergrößerten Abstand zwischen Lenkrad 13 und Kassette K verlängert werden. Dabei ist sichergestellt, daß das Lenkrad 13 eine ausschließlich axial gerichtete Bewegung ausführt. Nach Durchführung der abschließenden Justierarbeiten wird das Lenkrad 13 wieder in Richtung der Kassette K verschoben, bis es seine aus Fig. 3 ersichtliche Arbeitsposition hat. Die Befestigungselemente 16 werden dabei wieder verkürzt. Das Lenkrad 13 wird dann endgültig am Lenkstock 14 befestigt.

## Patentansprüche

1. Vorrichtung zur Signalübertragung zwischen zwei Endstellen (6,8), zwischen denen eine in Windungen verlaufende und in einer im wesentlichen kreisförmigen Kassette (K) untergebrachte elektrische Leitung (10) angeordnet ist, an die weiterführende Leitungen (5,7) an den beiden Endstellen anschließbar sind und deren Länge wesentlich größer als der Abstand der beiden Endstellen (6,8) voneinander ist, bei welcher mindestens eine der beiden Endstellen (6,8) relativ zu der anderen bewegbar ist und bei welcher die Kassette (K) aus zwei Teilen besteht, einem um die Achse derselben drehbaren Rotor (11), der in Montageposition mit einem zur Lenksäule eines Kraftfahrzeugs gehörenden Lenkrad (13) verbunden ist und einem feststehenden Stator (12), der in Montageposition mit einem Lenkstock (14) der Lenksäule verbunden ist, wobei die Leitung (10) zwischen Rotor (11) und Stator (12) angeordnet und an ihrem einen Ende mit einem ersten Teil eines elektrischen Steckverbinders (15) verbunden ist, an dessen Kontaktelemente ihre Leiter elektrisch leitend angeschlossen sind,
**dadurch gekennzeichnet**,
- daß ein zweiter Teil des Steckverbinders (15) mit zu den Kontaktelementen des ersten Teils passenden Gegenkontakten am Lenkstock (14) der Lenksäule angebracht ist,
- daß das Lenkrad (13) mit daran angebrachter Kassette (K) auf den Lenkstock (14) der Lenksäule aufgesetzt und fest, aber drehbar mit demselben verbunden ist, wobei der erste Teil des Steckverbinders (15) unter Herstellung einer elektrisch leitenden Verbindung einrastend auf den zweiten Teil desselben aufgesteckt ist,
- daß der Steckverbinder (15), dessen erster Teil am Stator (12) der Kassette (K) angebracht ist, den Stator (12) unverdrehbar festhält und
- daß die Kassette (K) mit dem Lenkrad (13) über Befestigungselemente (16) verbunden ist, die unter Beibehaltung der eingerasteten Verbindung der beiden Teile des Steckverbinders (15) eine begrenzte, ausschließlich axial gerichtete Relativbewegung zwischen dem Lenkrad (13) und der Kassette (K) zulassen.

2. Vorrichtung nach Anspruch 1, **dadurch gekennzeichnet**, daß die Befestigungselemente (16) aus teleskopartig ineinander bewegbaren Teilen besteht.

3. Vorrichtung nach Anspruch 1 oder 2, **dadurch gekennzeichnet**, daß die Befestigungselemente (16) am Lenkrad (13) einerseits und am Rotor (11) der Kassette (K) andererseits angebracht ist.

4. Vorrichtung nach einem der Ansprüche 1 bis 3, **dadurch gekennzeichnet**, daß der im Durchmesser größte Teil der Befestigungselemente (16) am Lenkrad (13) befestigt ist.

## Claims

1. Device for signal transmission between two terminals (6, 8) between which, coiled up and accommodated in an essentially circular cassette (K), is disposed an electrical line (10) to which outgoing lines (5, 7) are connectable at the two terminals and whose length is substantially larger than the distance of the two terminals (6, 8) from each other, wherein at least one of the two terminals (6, 8) is movable relative to the other and wherein the cassette (K) consists of two parts, a rotor (11) which is rotatable about the axis of the cassette and which in the installed position is connected to a steering wheel (13) on the steering column of an automobile, and a stationary stator (12) which in the installed position is connected to a steering shaft (14) of the steering column, the line (10) being disposed between rotor (11) and stator (12) and being connected at one of its ends to a first part of an electrical connector (15) to whose contact elements its conductors are connected in an electrically conducting manner, **characterized in that**
- a second part of the connector (15) is mounted with mating contacts on the steering shaft (14) of the steering column which mate with the contact elements of the first part,
- the steering wheel (13) with cassette (K) mounted thereon is set onto the steering shaft (14) of the steering column and is connected therewith firmly but rotatably, the first part of the connector (15) being stuck onto the second part thereof in a latching manner so as to create an electrically conducting connection,
- the connector (15), whose first part is mounted on the stator (12) of the cassette (K), secures the stator (12) in an untwistable manner, and
- the cassette (K) is connected to the steering wheel (13) via fastening elements (16) which, while maintaining the latched connection of the two parts of the connector (15), permit a limited, exclusively axially-directed relative motion between the steering wheel (13) and the cassette (K).

2. Device according to claim 1, **characterized in that** each of the fastening elements (16) comprises parts that are movable within one another in a telescoping manner.

3. Device according to claim 1 or 2, **characterized in that** each of the fastening elements (16) is connected to the steering wheel (13) at one end and to the rotor (11) of the cassette (K) at the other end.

4. Device according to any of claims 1 to 3, **characterized in that** the part of each fastening element (16) having the largest diameter is fastened to the steering wheel (13).

## Revendications

1. **Dispositif** de transmission de signaux entre deux stations terminales (6 et 8) reliées par un circuit électrique (10) formé de spires et logé dans une cassette circulaire(K).Ce circuit permet également de raccorder aux deux stations terminales des circuits supplémentaires (5 et 7) d'une longueur dépassant largement la distance entre celles-ci (6,8) ; l'une au moins des stations terminales (6,8) est mobile par rapport à l'autre. La cassette (K) se compose de deux parties : l'une est montée autour de l'axe du rotor tournant (11) qui, dans sa position de montage, est relié au volant (13) de la colonne de direction d'un véhicule ; l'autre est constituée d'un stator fixe (12) qui, dans sa position de montage, est relié à l'arbre (14) de la colonne de direction. Ainsi l'une des extrémités du circuit (10) monté entre le rotor (11) et le stator (12) est reliée à la première partie d'un connecteur multibroche (15) et les conducteurs sont branchés aux contacts du connecteur en vue d'établir la conduction électrique,
**se distinguant par les éléments suivants :**
- un deuxième élément du connecteur multibroche (15) vient s'adapter aux contacts du premier élément est installé sur l'arbre (14) de la colonne de direction
- le volant (13)avec la cassette (K) est fixé sur l'arbre (14) de la colonne de direction dont il suit les mouvements rotatifs, et le premier élément du connecteur multibroche (15) s'adapte sur le deuxième en créant une connexion électrique,
- le connecteur (15), dont le premier élément est fixé au stator (12) de la cassette (K) maintient le stator (12) en position fixe, non sujet aux mouvements rotatifs,
- la liaison entre la cassette (K) et le volant (13) est établie par l'intermédiaire d'éléments de fixation (16) qui, lorsque le raccord enclenché des deux éléments du connecteur (15) est maintenu, ne permet qu'un déplacement axial relatif, entre le volant (13) et la cassette (K).

2. **Dispositif** répondant à la spécification 1, **remarquable du fait qu'**il possède des éléments de fixation (16) composés de pièces mobiles pouvant s'imbriquer les unes dans les autres comme un télescope.

3. **Dispositif** répondant aux spécifications 1 ou 2, **remarquable du fait qu'il** dispose d'éléments de fixation (16) montés au volant (13) d'un côté et au rotor (11) de la cassette (K) de l'autre côté.

4. **Dispositif** correspondant aux spécifications 1 à 3, **remarquable du fait que** la partie des éléments de fixation (16) ayant le diamètre le plus grand soit fixée au volant (13).
